# EUROPÄISCHE PATENTSCHRIFT

(11) **EP 2 322 368 B1**
(45) Veröffentlichungstag und Bekanntmachung des Hinweises auf die Patenterteilung: **20.05.2015**
(21) Anmeldenummer: 10191607.0
(22) Anmeldetag: 17.11.2010
(51) Int. Cl.: B60H 1/00, F16L 39/00

(54) **Verbindungsvorrichtung**
Connection device
Dispositif de raccordement

(30) Priorität: 17.11.2009 DE 102009053432
(43) Veröffentlichungstag der Anmeldung: 18.05.2011
(73) Patentinhaber: MAHLE Behr GmbH & Co. KG, 70469 Stuttgart (DE)
(72) Erfinder: Gonzàlez Rechea, Pedro, 70193, Stuttgart (DE)
(74) Vertreter: Grauel, Andreas

(56) Entgegenhaltungen:
- EP-A1- 0 593 353
- DE-A1-102008 031 611
- FR-A1- 2 902 856
- US-A- 5 467 611

## Beschreibung

Die Erfindung betrifft eine Verbindungsvorrichtung für Kältemittelleitungen in einem Kältemittelkreislauf einer Klimaanlage eines Kraftfahrzeugs, nach dem Oberbegriff des Anspruchs 1.

Für Kältekreisläufe von Fahrzeugen werden in vielen Fällen Verdampfer und Expansionsorgan als eine bauliche Einheit geliefert. Der Verdampfer und das Expansionsorgans sind hierbei durch zwei Leitungen kommunizierend verbunden. Die Leitungen, die im Anschlussbereich des Expansionsorgans im Wesentlichen parallel sind, werden in das Expansionsorgan gesteckt und durch eine Fixiereinrichtung mit dem Expansionsorgans verspannt. Dabei drückt ein Halteelement gegen eine Wulst oder einen Ringbund, der sich an der Leitung befindet und realisiert eine Verbindung zwischen den Leitungen und dem Expansionsorgan.

Die DE 691 00 440 T2 offenbart einen Flansch zum gleichzeitigen Verbinden eines eintretenden Rohrs und eines austretenden Rohrs eines Verdampfers mit einem Druckminderventil, wobei der Flansch auf Ringbünden der Rohre aufliegt und durch Einspannmittel eine Verbindung zwischen den Rohren und dem Druckminderventil ausbildet. Der Flansch hat die Form einer länglichen Platte, durch deren Dicke zwei Einschnitte hindurch verlaufen, die jeweils in den gegenüberliegenden Enden münden und zur jeweiligen Aufnahme der zwei Rohre geeignet sind, mit halbkreisförmigen Böden, die an den Kreisumfang der Rohre angepasst sind.

Die DE 10 2008 031 611 A1 offenbart ein plattenförmiges Halteelement, das aus einem ersten und einem zweiten Teil besteht und ebenfalls dazu dient, zwei Kältemittelleitungen mit einem Expansionsorgan zu verbinden.

Diese Halteelemente sind im Wesentlichen planar ausgebildet und lassen daher noch Wünsche, insbesondere bezüglich der Festigkeit und Eigensteifigkeit, offen.

FR-A-2902856 offenbart ein konkav gewölbtes Halteelement gemäß dem ersten Teil des Anspruchs 1.

Es ist daher Aufgabe der Erfindung, eine verbesserte Verbindungsvorrichtung herzustellen, bei der diese Probleme behoben werden und die zudem einfach und kostengünstig herzustellen ist.

Diese Aufgabe wird gelöst durch eine Verbindungsvorrichtung mit den Merkmalen des Anspruchs 1. Vorteilhafte Ausgestaltungen sind Gegenstand der Unteransprüche.

Erfindungsgemäß ist eine Verbindungsvorrichtung für eine erste und eine zweite Leitung mit mindestens einer Komponente eines Kältemittelkreislaufes vorgesehen, wobei die Leitungen im Anschlussbereich im Wesentlichen parallel verlaufen und die Verbindungsvorrichtung ein Halteelement mit zwei Öffnungen für die erste und zweite Leitung aufweist und das Halteelement im Wesentlichen senkrecht zu den beiden Achsen der ersten und zweiten Leitung angeordnet ist und die erste und zweite Leitung mittels mindestens einer Fixiereinrichtung mit der Komponente des Kältemittelkreislaufes fixiert, wobei das Haltelement auf beiden Seite eine konkave Wölbung aufweist, die sich durchgehend von einem Ende des Halteelements bis zum anderen Ende erstrecht.

Durch die Wölbung wird die Eigensteifigkeit und somit die Festigkeit des Halteelementes im montierten Zustand deutlich gegenüber den Halteelemente aus dem Stand der Technik erhöht.

Das Halteelement ist im Wesentlichen plattenförmig mit zwei flächigen Seiten ausgebildet. Erfindungsgemäß ist somit unter dem technischen Merkmal "Seite" eine flächige Seite des Halteelementes zu verstehen.

Ferner ist unter dem technischen Merkmal "durchgehende Wölbung" eine Wölbung zu verstehen, die sich von einem Ende bis zum anderen Ende des Halteelementes erstreckt.

Bevorzugt weist das Halteelement eine konkave Wölbung auf beiden Seiten auf, so dass eine symmetrische Form des Halteelementes ausgebildet wird.

In einer alternativen Ausführungsform ist das Halteelement zumindest teilweise oder vollständig aus Kunststoff ausgebildet. Somit kann das Haltelement einfach und kostengünstig hergestellt werden.

In einer alternativen Ausführungsform weist das Halteelement zumindest eine, bevorzugt zwei, weitere Öffnungen zur Aufnahme der Fixiereinrichtung, insbesondere einer Spannschraube, auf. Hierbei ist es möglich, dass bei Verwendung eines Halteelementes aus Kunststoff das Gewinde direkt im Kunststoff ausgebildet ist oder die mindestens eine weitere Öffnung durch eine Metallhülse, in der das Gewinde ausgebildet ist, verstärkt wird.

In einer weiteren alternativen Ausführungsform weist das Halteelement zumindest eine, bevorzugt jedoch mehrere, Aussparungen auf, die insbesondere parallel zu den flächigen Seiten des Halteelementes ausgebildet sind. Die zumindest eine Aussparung kann beispielsweise eine runde, ovale, rechteckige Form oder eine Kombination aus diesen Formen aufweisen und dient insbesondere dazu Material und somit Gewicht einzusparen und/oder die Festigkeit des Halteelementes zu erhöhen. Alternativ kann das Halteelement auch derart ausgebildet sein, dass die Aussparungen orthogonal zu den flächigen Seiten angeordnet sind.

Bevorzugt ist erfindungsgemäß die Komponente des Kältemittelkreislaufes als ein Expansionsorgan ausgebildet.

Erfindungsgemäß wird die Verbindungsvorrichtung eingesetzt, um eine Baueinheit, bestehend aus einem Wärmeübertrager, bevorzugt einem Verdampfer, einem Expansionsorgan und zwei Leitungen kommunizierend zu verbind den.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Weitere wichtige Merkmale der vorliegenden Erfindung ergeben sich aus der nachfolgenden detaillierten Beschreibung in Verbindung mit den Ansprüchen und den Zeichnungen.

Nachfolgend werden bevorzugte Ausführungsbeispiele einer erfindungsgemäßen Verbindungsvorrichtung beschrieben und anhand der anliegenden Zeichnungen näher erläutert.

Es zeigen:
Fig. 1 eine Verbindungsvorrichtung gemäß dem Stand der Technik;
Fig. 2a und Fig. 2b ein Halteelement gemäß vorliegender Erfindung in einer perspektivischen Ansicht beziehungsweise in einer Seitenansicht;
Fig. 2c ein weiteres Ausführungsbeispiel eines erfindungsgemäßen Halteelementes;
Fig. 3a und Fig. 3b eine Verbindungsvorrichtung gemäß vorliegender Erfindung in einer perspektivischen Ansicht beziehungsweise in einer Seitenansicht;
Fig. 4 und Fig. 5 zwei weitere Ausführungsbeispiele eines erfindungsgemäßen Halteelementes;
Fig. 6a und Fig. 6b ein weiteres Ausführungsbeispiel eines Halteelement in einer perspektivischen Ansicht beziehungsweise in einer Seitenansicht;

Fig, 1 zeigt eine Verbindungsvorrichtung 1 gemäß dem Stand der Technik. Eine derartige Verbindungsvorrichtung 1 besteht aus zwei Leitungen 2 und 3, die mittels eines Halteelementes 5 an einem Expansionsorgan 4 eines Kältemittelkreislaufes einer Klimaanlage fixiert sind.

Die Fixierung wird hierbei wie in der DE 10 2008 031 611 A1 realisiert, indem zwei Schrauben 15 das Haltelement mit den beiden Leitungen und dem Expansionsorgan verspannen, Das Halteelement, das im Wesentlichen eine Form des Buchstabens "h" aufweist, weist ferner zwei Öffnungen 6 und 7 auf, die die Leitungen 2 und 3 aufnehmen. Die beiden Leitungen weisen jeweils einen Ringbund 17 auf, der sich auf einer Anlagefläche des Expansionsorgans abstützt. Die Verbindung von den beiden Leitungen, dem Halteelement 5 und dem Expansionsorgan 4 wird dadurch realisiert, dass der Ringbund beim Verschrauben mittels des Halteelementes 5 entlang der Achse der beiden Leitungen gegen das Expansionsorgan gezogen wird, Die Dichtigkeit dieser Verbindungsvorrichtung 1 wird durch ein Dichtelement (nicht dargestellt) bewirkt, das beispielsweise in einer ringförmigen Aussparung des Expansionsorgans angeordnet ist,

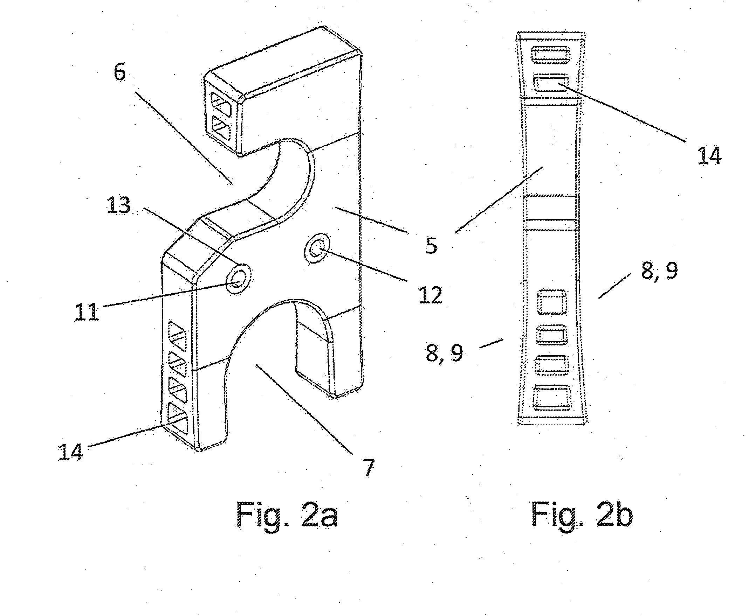

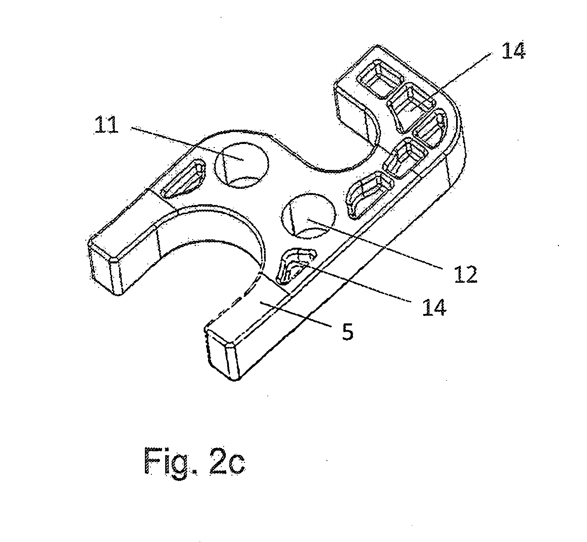

Die Fig. 2a und 2b zeigen ein erstes Ausführungsbeispiel eines erfindungsgemäßen Halteelementes 5 in verschiedenen Ansichten. Wie aus Fig, 2b ersichtlich ist das Halteelement auf beiden Seiten mit einer konkaven Wölbung 9 versehen, die sich durchgehend von einem Ende des Halteelements 5 bis zum anderen Ende erstreckt. Das Halteelement weist ferner in einem unteren Bereich vier Aussparungen und in einem oberen Bereich zwei Aussparungen 14 auf, die zur Gewichtsreduktion und somit zu einer Kostensenkung des Halteelementes dienen. Die Aussparungen können parallel zu den flächigen Seiten des Halteelementes ausgebildet sein (Fig. 2a und Fig. 2b) oder alternativ gemäß einer weiteren Ausführungsform gemäß Fig. 2c orthogonal dazu.

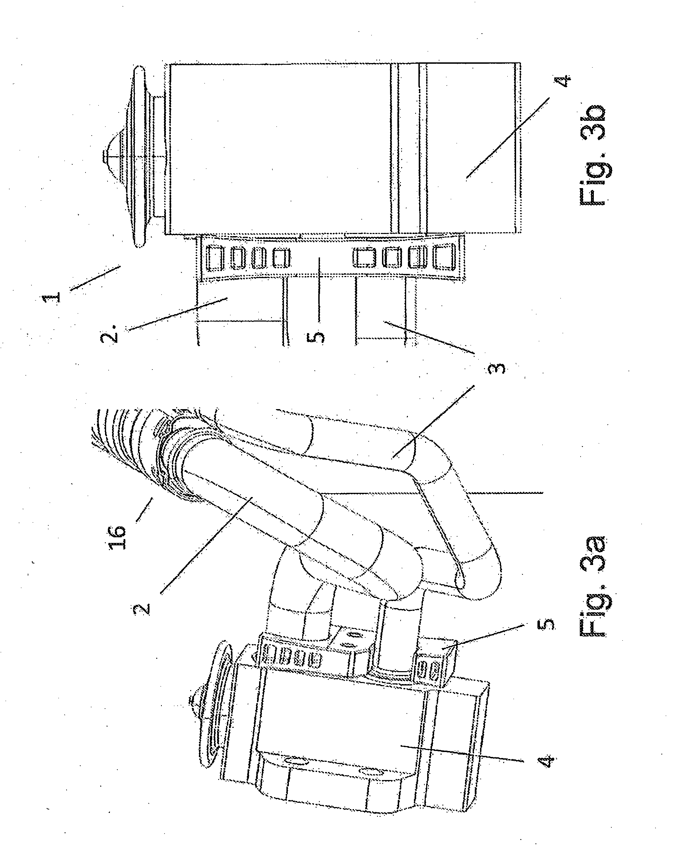

Die Fig. 3a und 3b zeigen das Halteelement 5 in einer Perspektiv- beziehungsweise Seitenansicht im montierten Zustand. Die beiden Öffnungen des Halteelements 6 und 7 nehmen hierbei die beiden Leitungen 2 und 3 auf. Die Öffnungen 6 und 7 sind kreisförmig und deren Innendurchmesser entspricht im Wesentlichen dem Außendurchmesser der jeweiligen aufzunehmenden Leitung.

Das Haltelement 5 ist im Wesentlichen senkrecht zu den beiden Leitungen 2 und 3 angeordnet. Deutlich zu erkennen ist in Fig. 3b auch die beiderseitig konkave Form des Halteelementes, die dem Haltelement im montierten Zustand eine erhöhte Festigkeit verleiht. Im rechten oberen Teil von Fig. 3a ist schematisch ein Sammler 16 eines Verdampfers dargestellt, Erfindungsgemäß wird ein Verdampfer mit angelöteten Leitungen 2 und 3 und eine Verbindungsvorrichtung 1 als eine Baueinheit verstanden.

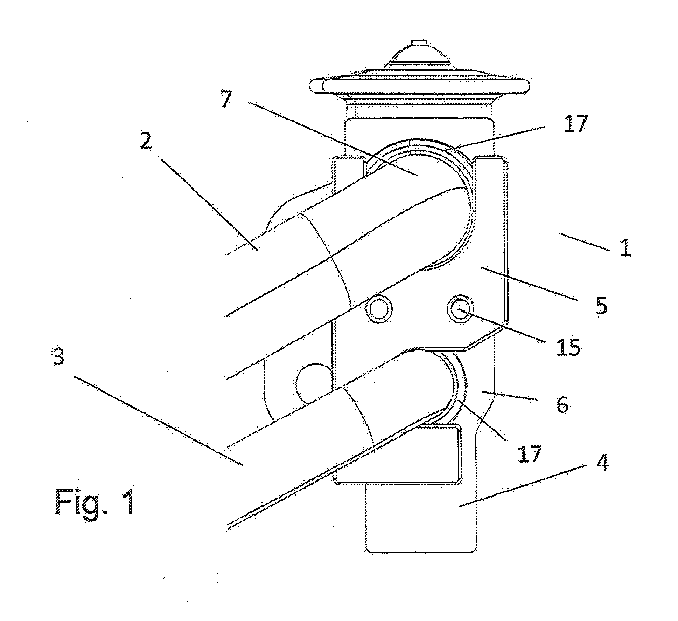

Die Verbindung von den beiden Leitungen 2 und 3, dem Halteelement 5 und dem Expansionsorgan 4 erfolgt in ähnlicher Weise wie bei der Verbindungsvorrichtung gemäß Fig. 1.

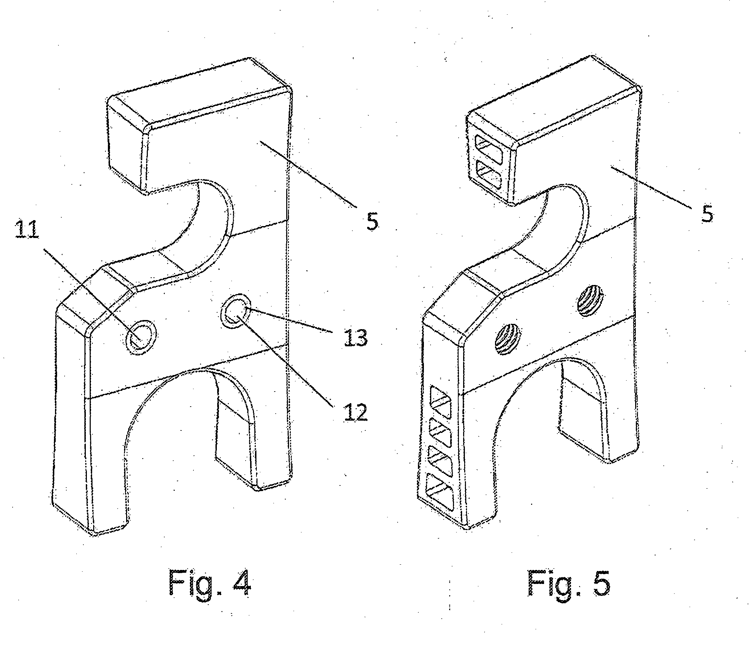

Die Fig. 4 und Fig. 5 zeigen zwei weitere Ausführungsbeispiele eines erfindungsgemäßen Halteelementes. Das Halteelement gemäß Fig. 4 unterscheidet sich von dem Halteelement gemäß Fig. 2a und 2b dadurch, dass die Aussparungen fehlen. Das Haltelement gemäß Fig. 5 weist keine Metallhülse 13 auf, so dass das Gewinde direkt in dem Kunststoffmaterial ausgebildet ist.

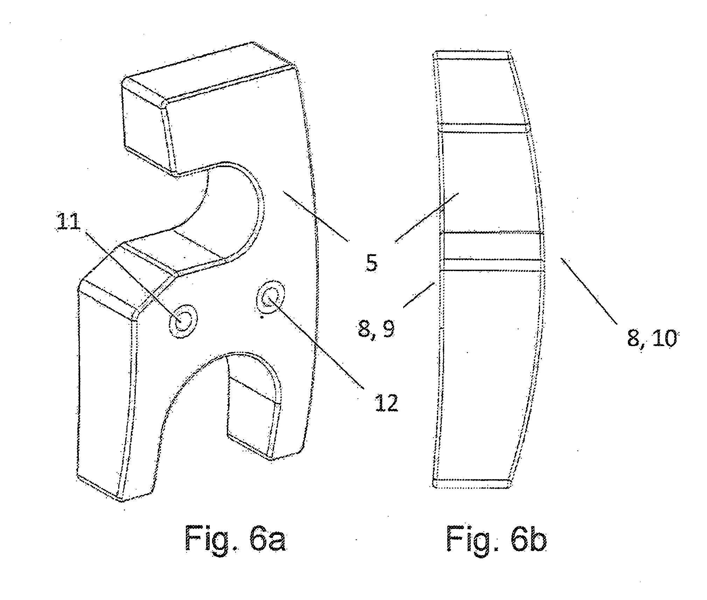

Das Halteelement gemäß den Fig. 6a und 6b weist eine asymmetrische Form auf, die durch eine leicht konkave Wölbung 9 auf der linken flächigen Seite und eine stärker ausgebildete konvexe Wölbung 10 auf der rechten flächigen Seite des Halteelementes ausgebildet wird. Insgesamt ergibt sich auch durch eine derartige Form des Halteelementes eine erhöhte Festigkeit im montierten Zustand.

## Patentansprüche

1. Verbindungsvorrichtung (1) für Kältemittelleitungen in einem Kraftfahrzeug, insbesondere für eine erste (2) und eine zweite (3) Leitung,
mit mindestens einer Komponente (4) eines Kältemittelkreislaufes, wobei die Verbindungsvorrichtung ein Halteelement (5) mit zwei Öffnungen (6, 7) für die erste und zweite Leitung umfasst und das Halteelement im Wesentlichen senkrecht zu den beiden Achsen der ersten und zweiten Leitung angeordnet ist und die erste und zweite Leitung mittels mindestens einer Fixiereinrichtung (15) mit dem Element der Komponente des Kältemittelkreislaufes fixiert,
**dadurch gekennzeichnet, dass**
das Halteelement (5) auf beiden Seiten eine konkave Wölbung aufweist, die sich durchgehend von einem Ende des Halteelements bis zum anderen Ende erstreckt.

2. Verbindungsvorrichtung nach Anspruch 1,
**dadurch gekennzeichnet, dass**
das Halteelement (5) im Wesentlichen plattenförmig ausgebildet ist.

3. Verbindungsvorrichtung nach einem der vorhergehenden Ansprüche, **dadurch gekennzeichnet, dass**
das Halteelement zumindest teilweise aus Kunststoff ausgebildet ist.

4. Verbindungsvorrichtung nach einem der vorhergehenden Ansprüche, **dadurch gekennzeichnet, dass**
das Halteelement zumindest eine, bevorzugt zwei, weitere Öffnungen (11, 12) zur Aufnahme der Fixiereinrichtung (15), insbesondere einer Spannschraube, aufweist.

5. Verbindungsvorrichtung nach Anspruch 4,
**dadurch gekennzeichnet, dass**
die zumindest eine weitere Öffnung eine Metallhülse (13) mit einem Gewinde umfasst oder das Gewinde direkt in der Öffnung ausgebildet ist, in das die Fixiereinrichtung einschraubbar ist.

6. Verbindungsvorrichtung nach einem der vorhergehenden Ansprüche, **dadurch gekennzeichnet,**
**dass** das Haltelement eine, bevorzugt mehrere, Aussparungen (14) aufweist, die ausgebildet sind, um das Gewicht des Halteelementes zu reduzieren und/oder die Festigkeit zu erhöhen.

7. Verbindungsvorrichtung nach einem der vorhergehenden Ansprüche, **dadurch gekennzeichnet, dass**
die Komponente (4) des Kältemittelkreislaufes als ein Expansionsorgan ausgebildet ist.

8. Halteelement (5) für eine Verbindungsvorrichtung für Kältemittelleitungen in einem Kraftfahrzeug,
**dadurch gekennzeichnet, dass**
das Halteelement nach einem der vorhergehenden Ansprüche ausgebildet ist.

## Claims

1. A connection device (1) for coolant lines in a motor vehicle, in particular for a first (2) and a second (3) line, comprising at least one component (4) of a coolant circuit, wherein the connection device comprises a retaining element (5) having two openings (6, 7) for the first and second line, and the retaining element is arranged substantially perpendicularly to the two axes of the first and second line, and the first and second line are fixed to the element of the component of the coolant circuit by means of at least one fixing means (15), **characterised in that** the retaining element (5) has a concave curvature on both sides that extends continuously from one end of the retaining element to the other end.

2. The connection device according to claim 1, **characterised in that** the retaining element (5) is substantially plate-shaped.

3. The connection device according to one of the preceding claims, **characterised in that** the retaining element is formed at least in part of plastic.

4. The connection device according to one of the preceding claims, **characterised in that** the retaining element has at least one further opening, preferably two further openings (11, 12), for receiving the fixing means (15), in particular a tensioning screw.

5. The connection device according to claim 4, **characterised in that** the at least one further opening comprises a metal sleeve (13) with a thread, or the thread is formed directly in the opening into which the fixing means can be screwed.

6. The connection device according to one of the preceding claims, **characterised in that** the retaining element has a recess, preferably a plurality of recesses (14), which are configured to reduce the weight of the retaining element and/or to increase the strength.

7. The connection device according to one of the preceding claims, **characterised in that** the component (4) of the coolant circuit is formed as an expansion member.

8. A retaining element (5) for a connection device for coolant lines in a motor vehicle, **characterised in that** the retaining element is formed in accordance with one of the preceding claims.

## Revendications

1. Dispositif de raccordement (1) pour des conduites de fluide frigorigène dans un véhicule automobile, en particulier pour une première (2) et une deuxième (3) conduites, comprenant au moins un composant (4) d'un circuit de fluide frigorigène, où le dispositif de raccordement comprend un élément de retenue (5) comportant deux ouvertures (6, 7) pour la première et la deuxième conduites, et l'élément de retenue est disposé sensiblement de façon perpendiculaire aux deux axes de la première et de la deuxième conduites et, au moyen d'au moins un dispositif de fixation (15), ledit élément de retenue fixe la première et la deuxième conduites avec l'élément du composant du circuit du fluide frigorigène, **caractérisé en ce que** l'élément de retenue (5) présente, des deux côtés, une courbure concave qui s'étend, en continu, depuis une extrémité de l'élément de retenue jusqu'à l'autre extrémité.

2. Dispositif de raccordement selon la revendication 1, **caractérisé en ce que** l'élément de retenue (5) est configuré sensiblement en forme de plaque.

3. Dispositif de raccordement selon l'une ou l'autre des revendications précédentes, **caractérisé en ce que** l'élément de retenue est composé au moins partiellement de matière plastique.

4. Dispositif de raccordement selon l'une quelconque des revendications précédentes, **caractérisé en ce que** l'élément de retenue présente au moins une, de préférence deux autres ouvertures (11, 12) servant au logement du dispositif de fixation (15), en particulier d'une vis de serrage.

5. Dispositif de raccordement selon la revendication 4, **caractérisé en ce que** l'autre ouverture au moins au nombre de un comprend une douille métallique (13) comportant un filetage, ou bien le filetage est configuré directement dans l'ouverture, filetage dans lequel peut être vissé le dispositif de fixation.

6. Dispositif de raccordement selon l'une quelconque des revendications précédentes, **caractérisé en ce que** l'élément de retenue présente un, de préférence plusieurs évidements (14) qui sont configurés pour réduire le poids de l'élément de retenue et / ou pour augmenter la solidité.

7. Dispositif de raccordement selon l'une quelconque des revendications précédentes, **caractérisé en ce que** le composant (4) du circuit de fluide frigorigène est conçu comme un détendeur.

8. Elément de retenue (5) pour un dispositif de raccordement prévu pour des conduites de fluide frigorigène dans un véhicule automobile, **caractérisé en ce que** l'élément de retenue est configuré selon l'une quelconque des revendications précédentes.
